(19) Europäisches Patentamt
European Patent Office
Office européen des brevets

(11) EP 2 230 273 A1

(12) EUROPEAN PATENT APPLICATION

(43) Date of publication:
22.09.2010 Bulletin 2010/38

(51) Int Cl.:
*C08L 23/10* (2006.01)

(21) Application number: 09154640.8

(22) Date of filing: 09.03.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicant: Total Petrochemicals Research Feluy
7181 Seneffe (Feluy) (BE)

(72) Inventors:
- Radermacher, Fabienne
B - 6230, OBAIX (BE)
- Fant, Franky
B-9230, Wetteren (BE)

# (54) Polypropylene composition in blown film

(57) The present invention relates to a polypropylene composition comprising a first component being a propylene polymer produced in presence of a metallocene-based catalyst system, and a second component being a random copolymer of propylene and one or more comonomers, said random copolymer being produced in presence of a Ziegler-Natta polymerization catalyst. The polypropylene composition of the present invention is particularly suited for blown film and is characterized by excellent optical properties. Further, the present invention relates to a multilayer film or a laminate comprising such a blown film. Additionally, the present invention relates to a process for producing such a blown film, multilayer film or laminate.

EP 2 230 273 A1

## Description

### Field of the invention

The present invention relates to a polypropylene composition comprising a first component being a propylene polymer produced in presence of a metallocene-based catalyst system, and a second component being a random copolymer of propylene and one or more comonomers, said random copolymer being produced in presence of a Ziegler-Natta polymerization catalyst. The polypropylene composition of the present invention is particularly suited for blown film and is characterized by excellent optical properties. Further, the present invention relates to a multilayer film or a laminate comprising such a blown film. Additionally, the present invention relates to a process for producing such a blown film, multilayer film or laminate.

### The technical problem and the prior art

Polypropylene films may be produced by a number of different production processes, such as the cast film process, the blown film process or the BOPP (biaxially oriented polypropylene) process, to name only a few.

In the blown film process polypropylene is melt-extruded through an annular die. The molten bubble passes through an air ring, which expands the bubble and aids in cooling the molten polypropylene. Further cooling of the bubble can be done either by using water on the outer and/or inner surfaces of the bubble (water-quenched blown film) or by using air on the outer and/or inner surfaces of the bubble (air-quenched blown film). The cooled bubble is finally collapsed and wound. Optionally, it can be slit and wound on two separate rolls.

The polypropylenes conventionally used in the blown film process generally have a melt flow index in the range from 6 dg/min to 12 dg/min when used in water-quenched blown film and from 0.8 dg/min or even less to 4 dg/min in the air-quenched blown film process

While some processes, such as the cast film or the BOPP process are well adapted to polypropylene and allow the production of good quality films without major difficulties in processing, so far this has not been the case for the blown film process. In the blown film process polypropylenes have frequently given either bad processability or inadequate optical properties or both.

There is therefore a need in the industry for a polypropylene or polypropylene composition that is not characterized by the mentioned drawbacks.

It is therefore an objective of the present invention to provide a polypropylene composition that has good processability in blown film.

It is a further objective of the present invention to provide a polypropylene composition having good optical properties when made into a blown film.

Furthermore it is an objective of the present invention to provide a polypropylene composition combining good processability in blown film and good optical properties when made into a blown film.

Additionally, it is an objective of the present invention to provide a blown film having good optical properties.

### Brief description of the invention

The present inventors have found that any one the above objective can be fulfilled either alone or in combination with one or more other objectives by the polypropylene composition of the present invention.

To this end, the present invention provides a polypropylene composition having a melt flow index in the range from 0.1 dg/min to 15.0 dg/min, said polypropylene composition comprising

(a) from 5 wt% to 50 wt% relative to the polypropylene composition of a first component, said first component being a propylene polymer produced in presence of a metallocene-based catalyst system, and
(b) from 95 wt% to 50 wt% relative to the polypropylene composition of a second component, said second component being a random copolymer of propylene one or more comonomers produced in presence of a Ziegler-Natta polymerization catalyst,

wherein the first component has a melt flow index in the range from 5.0 dg/min to 100 dg/min,
wherein the second component comprises from 0.5 wt% to 6.0 wt%, relative to the total weight of the random copolymer, of one or more comonomers different from propylene, and wherein the second component has a melt flow index in the range from 0.5 dg/min to 5.0 dg/min, with all melt flow indices measured according to ISO 1133, condition L, at 230°C and 2.16 kg.

Further, the present invention provides a blown film comprising the above polypropylene composition.

In addition, the present invention provides a process for the production of the inventive blown film, the process

comprising the steps of

(a) providing the polypropylene polymer composition of claims 1 to 5 to a first extruder,
(b) melt-extruding the propylene polymer composition of step (a) through an annular die to form a first extrudate, and
(c) cooling the extrudate obtained in the preceding step by means of air and/or water on the outer and/or inner surfaces of the extrudate to form a blown film.

**Detailed description of the invention**

For the purposes of the present invention, the terms "polypropylene" and "propylene polymer" may be used synonymously. The term "propylene polymer" is meant to include propylene homopolymer as well as propylene copolymer.

For the purposes of the present invention, the preferred thickness of a film is in the range from 5 μm to 300 μm. More preferably, the thickness is at least 10 μm or 20 μm, even more preferably at least 50 μm, still even more preferably at least 75 μm, and most preferably at least 100 μm. More preferably, the thickness is at most 250 μm, and most preferably at most 200 μm.

For the purposes of the present invention a multilayer film is defined as having been produced in a single extrusion process, i.e. by co-extrusion of the different layers of the film.

For the purposes of the present invention a laminate is defined as having been produced by combining at least two films that were produced independently from one another.

POLYPROPYLENE COMPOSITION

The polypropylene composition of the present invention comprises from 5 wt% to 50 wt%, relative to the polypropylene composition, of a first component and from 95 wt% to 50 wt%, relative to the polypropylene composition, of a second component.

The polypropylene composition of the present invention has a melt flow index (MFI) in the range from 0.10 dg/min to 15.0 dg/min. When used in the air-quenched blown film process, the melt flow index (MFI) of the polypropylene composition preferably is at least 0.25 dg/min, more preferably at least 0.50 dg/min, and most preferably at least 0.75 dg/min; preferably it is at most 8.0 dg/min, more preferably at most 7.0 dg/min or 6.0 dg/min, even more preferably at most 5.0 dg/min, and most preferably at most 4.0 dg/min. When used in the water-quenched blown film process, the melt flow index (MFI) of the polypropylene composition preferably is at least 4.0 dg/min, more preferably at least 5.0 dg/min, and most preferably at least 6.0 dg/min; preferably it is at most 14.0 dg/min, more preferably at most 13.0 dg/min and most preferably at most 12.0 dg/min. The melt flow index (MFI) is measured according to ISO 1133, condition L, at 230°C and 2.16 kg. The ranges for the melt flow index of the polypropylene composition are to be understood in such a way that in addition to fulfilling all conditions regarding the melt flow indices of the respective components, the polypropylene composition as such has to fall within the specified range of melt flow indices.

For the present invention it is preferred that the polypropylene composition comprises an alpha-nucleating agent, i.e. that it is nucleated. For the purposes of the present invention a nucleating agent is defined as a chemical compound that raises the crystallization temperature of a propylene polymer.

It is preferred that the alpha-nucleating agent is comprised in the polypropylene composition in an amount from 10 ppm to 5000 ppm, relative to the total weight of the polypropylene composition. Preferably, the amount of alpha-nucleating agent is at least 20 ppm, 30 ppm, 40 ppm, 50 ppm, 60 ppm, 70 ppm, 80 ppm, 90 ppm, 120 ppm, 140 ppm, 160 ppm, 180 ppm or 200 ppm, relative to the total weight of the polypropylene composition. Preferably, the amount of alpha-nucleating agent is at most 4000 ppm, 3000 ppm, 2000 ppm, 1800 ppm, 1600 ppm, 1400 ppm, 1200 ppm or 1000 ppm relative to the total weight of the polypropylene composition.

The nucleating agent used in the present invention can be any of the alpha-nucleating agents known to the skilled person. It is, however, preferred that the alpha-nucleating agent be selected from the group consisting of talc, carboxylate salts, sorbitol acetals, phosphate ester salts, substituted benzene tricarboxamides and polymeric nucleating agents, as well as blends of these. Phosphate ester salts and carboxylate salts are more preferred. Phosphate ester salts are most preferred.

Examples for carboxylate salts used as nucleating agents in the present invention are organocarboxylic acid salts. Particular examples are sodium benzoate and lithium benzoate. The organocarboxylic acid salts may also be alicyclic organocarboxylic acid salts, preferably bicyclic organodicarboxylic acid salts and more preferably a bicyclo [2.2.1]heptane dicarboxylic acid salt. A nucleating agent of this type is sold as HYPERFORM® HPN-68 by Milliken Chemical.

Examples for sorbitol acetals are dibenzylidene sorbitol (DBS), bis(p-methyl-dibenzylidene sorbitol) (MDBS), bis(p-ethyl-dibenzylidene sorbitol) and bis(3,4-dimethyl-dibenzylidene sorbitol) (DMDBS). Bis(3,4-dimethyl-dibenzylidene sorbitol) (DMDBS) is preferred. These can for example be obtained from Milliken Chemical under the trade names of Millad 3905, Millad 3940 and Millad 3988.

Examples of phosphate ester salts are salts of 2,2'-methylene-bis-(4,6-di-tert-butylphenyl)phosphate. Such phosphate ester salts are for example available as NA-11, NA-21 or NA-71 from Asahi Denka.

Examples of substituted tricarboxamides are those of the following general formula

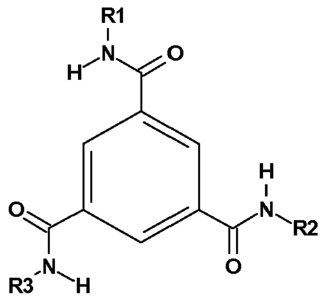

wherein R1, R2 and R3, independently of one another, are selected from $C_1$-$C_{20}$ alkyls, $C_5$-$C_{12}$ cycloalkyls, or phenyl, each of which may in turn by substituted with $C_1$-$C_{20}$ alkyls, $C_5$-$C_{12}$ cycloalkyls, phenyl, hydroxy, $C_1$-$C_{20}$ alkylamino or $C_1$-$C_{20}$ alkyloxy etc. Examples for $C_1$-$C_{20}$ alkyls are methyl, ethyl, n-propyl, n-butyl, iso-butyl, tert-butyl, n-pentyl, iso-pentyl, 1,1-dimethylpropyl, 1,2-dimethylpropyl, 3-methylbutyl, hexyl, heptyl, octyl or 1,1,3,3-tetramethylbutyl. Examples for $C_5$-$C_{12}$ cycloalkyl are cyclopentyl, cyclohexyl, cyclooctyl, cyclododecyl, adamantyl, 2-methylcyclohexyl, 3-methylcyclohexyl or 2,3-dimethylcyclohexyl. Such nucleating agents are disclosed in WO 03/102069 and by Blomenhofer et al. in Macromolecules 2005, 38, 3688-3695.

Examples of polymeric nucleating agents are polymeric nucleating agents containing vinyl compounds, which are for example disclosed in EP-A1-0152701 and EP-A2-0368577. The polymeric nucleating agents containing vinyl compounds can either be physically or chemically blended with the metallocene polypropylene. In physical blending the polymeric nucleating agent containing vinyl compounds is mixed with the metallocene-catalyzed propylene polymer in an extruder or in a blender. In chemical blending the metallocene-catalyzed propylene polymer comprising the polymeric nucleating agent containing vinyl compounds is produced in a polymerization process having at least two stages, in one of which the polymeric nucleating agent containing vinyl compounds is produced. Preferred vinyl compounds are vinyl cycloalkanes or vinyl cycloalkenes having at least 6 carbon atoms, such as for example vinyl cyclopentane, vinyl-3-methyl cyclopentane, vinyl cyclohexane, vinyl-2-methyl cyclohexane, vinyl-3-methyl cyclohexane, vinyl norbornane, vinyl cylcopentene, vinyl cyclohexene, vinyl-2-methyl cyclohexene. The most preferred vinyl compounds are vinyl cyclopentane, vinyl cyclohexane, vinyl cyclopentene and vinyl cyclohexene.

Further examples of polymeric nucleating agents are poly-3-methyl-1-butene, polydimethylstyrene, polysilanes and polyalkylxylenes. As explained for the polymeric nucleating agents containing vinyl compounds, these polymeric nucleating agents can be introduced into the metallocene-catalyzed propylene polymer either by chemical or by physical blending.

It is also possible to use high-density polyethylene, such as for example Rigidex HD6070EA, available from INEOS Polyolefins, or a polypropylene having a fractional melt flow, or a polypropylene that comprises a fraction of fractional melt flow.

Further, it is possible to use blends of nucleating agents, such as for example a blend of talc and a phosphate ester salt or a blend of talc and a polymeric nucleating agent containing vinyl compounds.

The alpha-nucleating agent may be introduced into the polypropylene composition by blending with an alpha-nucleating agent either in pure form or in form of a masterbatch, for example by dry-blending or by melt-blending. It is within the scope of the present invention that the alpha-nucleating agent can be introduced into the polypropylene composition by blending in of a nucleated thermoplastic polymer, e.g. of a masterbatch, wherein said thermoplastic polymer may be different or the same from the components of the polypropylene composition.

The polypropylene composition of the present invention may also comprise additives, such as for example antioxidants, light stabilizers, acid scavengers, lubricants, antistatic agents, fillers, colorants. An overview of useful additives is given in Plastics Additives Handbook, ed. H. Zweifel, 5th edition, Hanser Publishers.

## FIRST COMPONENT

For the present invention It is essential that the first component of the polypropylene composition is a metallocene-catalyzed propylene polymer, i.e. that it is produced in presence of a metallocene-based polymerization catalyst.

The use of a metallocene-based polymerization catalyst imparts specific properties to the propylene polymer. For example, metallocene-catalyzed propylene polymers are characterized by quite narrow molecular weight distribution as compared to propylene polymers produced by Ziegler-Natta catalysts. In propylene polymerization using a Ziegler-Natta catalyst the propylene always undergoes a 1,2-insertion into the growing polymer chain, whereas metallocene-based polymerization catalysts always result in a certain percentage of 2,1-insertions.

While the metallocene-catalyzed propylene polymer used in the present invention can be any type of propylene polymer, it is preferred that it is a propylene homopolymer or a random copolymer of propylene and one or more comonomers. Most preferably, the metallocene-catalyzed propylene polymer is a propylene homopolymer.

In case the first component is a metallocene-catalyzed random copolymer, the one or more comonomers are preferably selected from the group consisting of ethylene and $C_4$-$C_{10}$ alpha-olefins, such as for example 1-butene, 1-pentene, 1-hexene, 1-octene, or 4-methyl-1-pentene. Ethylene and 1-butene are the preferred comonomers. Ethylene is the most preferred comonomer.

In case the first component is a metallocene-catalyzed random copolymer, it preferably comprises up to 4.0 wt% of one or more comonomers. Preferably it comprises up to 3.5 wt%, most preferably up to 3.0 wt% of one or more comonomers. It is preferred that it comprises at least 0.5 wt%, and most preferably at least 1.0 wt%. For the purposes of the present invention the comonomer content of the metallocene-catalyzed random copolymer is given relative to the total weight of the metallocene-catalyzed random copolymer.

The melt flow index of the metallocene-catalyzed propylene polymer is in the range from 5.0 dg/min to 100 dg/min. Preferably, the melt flow index of the metallocene-catalyzed propylene polymer used in the present invention is at least 10.0 dg/min, and most preferably at least 12.0 dg/min. Preferably the melt flow index is at most 80 dg/min or 60 dg/min, more preferably at most 40 dg/min, even more preferably at most 30 dg/min, still even more preferably at most 20 dg/min, and most preferably at most 18 dg/min. The melt flow index is measured according to ISO 1133, condition L, at 230°C and 2.16 kg.

The molecular weight distribution (MWD), defined as the ratio of weight average molecular weight ($M_w$) over number average molecular weight ($M_n$), for metallocene-catalyzed propylene polymers generally is in the range from 1.0 to 8.0. Preferably, it is at most 6.0 or 5.0, more preferably at most 4.0, even more preferably at most 3.5, still even more preferably at most 3.0, and most preferably at most 2.5. Molecular weights can be determined by size exclusion chromatography (SEC).

Preferably, the metallocene-catalyzed propylene homopolymer used in the present invention is characterized by a melting temperature in the range from 135°C to 165°C, more preferably in the range from 140°C to 160°C, and most preferably in the range from 145°C to 155°C. Depending upon the comonomer content the metallocene-catalyzed random copolymers, which may be used in the present invention, have a melting temperature in the range from 100°C to 160°C. Melting temperatures can be determined by differential scanning calorimetry (DSC) according to ISO 3146. Generally, in order to erase the thermal history of the samples, they are first heated to a temperature above the melting temperature, e.g. to 200°C, and kept there for a certain time, e.g. for 3 minutes. After cooling the samples are then reheated for the measurement of the melting temperature. For the determination of the melting temperature the heating and cooling rate is 20°C/min.

Preferably, the metallocene-catalyzed propylene polymer used in the present invention is characterized by a xylene-solubles content of less than 4.0 wt%, more preferably of less than 3.5 wt%, even more preferably of less than 3.0 wt%, still even more preferably of less than 2.5 wt%, and most preferably of less than 2.0 wt%. The xylene solubles content (XS) is determined by dissolving the propylene polymer in refluxing xylene, cooling the solution to 25°C, filtering the solution, and subsequent evaporation of the solvent. The residue, which is the xylene soluble portion of the propylene polymer, is then dried and weighed.

The metallocene-catalyzed propylene polymer used in the present invention preferably is characterized by a high isotacticity, for which the content of mmmm pentads is a measure. Preferably, the content of mmmm pentads is at least 95 %, and most preferably at least 97 wt%. The isotacticity can be determined by $^{13}C$-NMR analysis.

The polymerization of propylene and one or more optional comonomers is performed in the presence of one or more metallocene-based polymerization catalysts comprising one or more metallocene components, a support and an activating agent having an ionizing action. Such metallocene-based polymerization catalysts are known to the person skilled in the art and need not be explained in great detail.

The metallocene component used to prepare the metallocene-catalyzed propylene polymer can be any bridged metallocene known in the art. Preferably it is a metallocene represented by the following general formula.

$$\mu\text{-}R^1(C_5R^2R^3R^4R^5)(C_5R^6R^7R^8R^9)MX^1X^2 \qquad (I)$$

wherein

the bridge $R^1$ is $-(CR^{10}R^{11})_p-$ or $-(SiR^{10}R^{11})_p-$ with p = 1 or 2, preferably it is - $(SiR^{10}R^{11})$-;

M is a metal selected from Ti, Zr and Hf, preferably it is Zr;
$X^1$ and $X^2$ are independently selected from the group consisting of halogen, hydrogen, $C_1$-$C_{10}$ alkyl, $C_6$-$C_{15}$ aryl, alkylaryl with $C_1$-$C_{10}$ alkyl and $C_6$-$C_{15}$ aryl;
$R^2$, $R^3$, $R^4$, $R^5$, $R^6$, $R^7$, $R^8$, $R^9$, $R^{10}$ and $R^{11}$ are each independently selected from the group consisting of hydrogen, $C_1$-$C_{10}$ alkyl, $C_5$-$C_7$ cycloalkyl, $C_6$-$C_{15}$ aryl, alkylaryl with $C_1$-$C_{10}$ alkyl and $C_6$-$C_{15}$ aryl, or any two neighboring R may form a cyclic saturated or non-saturated $C_4$-$C_{10}$ ring; each $R^2$, $R^3$, $R^4$, $R^5$, $R^6$, $R^7$, $R^8$, $R^9$, $R^{10}$ and $R^{11}$ may in turn be substituted in the same way.

The preferred metallocene components are represented by the general formula (I), wherein
the bridge $R^1$ is $SiR^{10}R^{11}$;
M is Zr;
$X^1$ and $X^2$ are independently selected from the group consisting of halogen, hydrogen, and $C_1$-$C_{10}$ alkyl; and
$(C_5R^2R^3R^4R^5)$ and $(C_5R^6R^7R^8R^9)$ are indenyl of the general formula $C_9R^{12}R^{13}R^{14}R^{15}R^{16}R^{17}R^{18}R^{19}$ wherein $R^{12}$, $R^{13}$, $R^{14}$, $R^{15}$, $R^{16}$, $R^{17}$, $R^{18}$ and $R^{19}$ are each independently selected from the group consisting of hydrogen, $C_1$-$C_{10}$ alkyl, $C_5$-$C_7$ cycloalkyl, $C_6$-$C_{15}$ aryl, and alkylaryl with $C_1$-$C_{10}$ alkyl and $C_6$-$C_{15}$ aryl, or any two neighboring R may form a cyclic saturated or non-saturated $C_4$-$C_{10}$ ring;
$R^{10}$ and $R^{11}$ are each independently selected from the group consisting of $C_1$-$C_{10}$ alkyl, $C_5$-$C_7$ cycloalkyl, and $C_6$-$C_{15}$ aryl, or $R^{10}$ and $R^{11}$ may form a cyclic saturated or non-saturated $C_4$-$C_{10}$ ring; and
each $R^{10}$, $R^{11}$, $R^{12}$, $R^{13}$, $R^{14}$, $R^{15}$, $R^{16}$, $R^{17}$, $R^{18}$ and $R^{19}$ may in turn be substituted in the same way.
Particularly suitable metallocenes are those having $C_2$-symmetry.
Examples of particularly suitable metallocenes are:

dimethylsilanediyl-bis(cyclopentadienyl)zirconium dichloride,
dimethylsilanediyl-bis(2-methyl-cyclopentadienyl)zirconium dichloride,
dimethylsilanediyl-bis(3-methyl-cyclopentadienyl)zirconium dichloride,
dimethylsilanediyl-bis(3-tert-butyl-cyclopentadienyl)zirconium dichloride,
dimethylsilanediyl-bis(3-tert-butyl-5-methyl-cyclopentadienyl)zirconium dichloride,
dimethylsilanediyl-bis(2,4-dimethyl-cyclopentadienyl)zirconium dichloride,
dimethylsilanediyl-bis(indenyl)zirconium dichloride,
dimethylsilanediyl-bis(2-methyl-indenyl)zirconium dichloride,
dimethylsilanediyl-bis(3-methyl-indenyl)zirconium dichloride,
dimethylsilanediyl-bis(3-tert-butyl-indenyl)zirconium dichloride,
dimethylsilanediyl-bis(4,7-dimethyl-indenyl)zirconium dichloride,
dimethylsilanediyl-bis(tetrahydroindenyl)zirconium dichloride,
dimethylsilanediyl-bis(benzindenyl)zirconium dichloride,
dimethylsilanediyl-bis(3,3'-2-methyl-benzindenyl)zirconium dichloride, dimethylsilanediyl-bis(4-phenyl-indenyl)zirconium dichloride, dimethylsilanediyl-bis(2-methyl-4-phenyl-indenyl)zirconium dichloride, ethylene-bis(indenyl)zirconium dichloride,
ethylene-bis(tetrahydroindenyl)zirconium dichloride,
isopropylidene-(3-tert-butyl-5-methyl-cyclopentadienyl)(fluorenyl) zirconium dichloride.

The polymerization of propylene and one or more optional comonomers in presence of a metallocene-based polymerization catalyst can be carried out according to known techniques in one or more polymerization reactors. The metallocene-catalyzed propylene polymer of the present invention is preferably produced by polymerization in liquid propylene at temperatures in the range from 20°C to 100°C. Preferably, temperatures are in the range from 60°C to 80°C. The pressure can be atmospheric or higher. It is preferably between 25 and 50 bar. The molecular weight of the polymer chains, and in consequence the melt flow of the metallocene polypropylene, is regulated by the addition of hydrogen to the polymerization medium.

SECOND COMPONENT

For the present invention It is essential that the second component of the polypropylene composition is a random copolymer of propylene and 0.5 wt% to 6.0 wt%, relative to the total weight of said random copolymer, of one or more comonomers different from propylene. Preferably, said second component comprises at most 5.5 wt%, more preferably at most 5.0 wt% and most preferably at most 4.5 wt% of the one or more comonomers different from propylene. It is preferred that the random copolymer comprises at least 0.5 wt%, more preferably at least 1.0 wt%, even more preferably at least 1.5 wt%, still even more preferably at least 2.0 wt%, and most preferably at least 2.5 wt% of the one or more comonomers different from propylene. For the purposes of the present invention the comonomer content of the

random copolymer is given relative to the total weight of the random copolymer.

The one or more comonomers preferably are selected from the group consisting of ethylene and $C_4$-$C_{10}$ alpha-olefins, such as for example 1-butene, 1-pentene, 1-hexene, 1-octene, or 4-methyl-1-pentene. Ethylene and 1-butene are the preferred comonomers. Ethylene is the most preferred comonomer.

The melt flow index (MFI) of the second component is in the range from 0.5 dg/min to 5.0 dg/min. Preferably, the melt flow index (MFI) of the second component is at least 1.0 dg/min, and most preferably at least 1.5 dg/min. Preferably, the melt flow index (MFI) of the second component is at most 4.0 dg/min, more preferably at most 3.0 dg/min, even more preferably at most 2.5 dg/min and most preferably at most 2.0 dg/min. The melt flow index (MFI) is measured according to ISO 1133, condition L, at 230°C and 2.16 kg.

For the present invention it is also essential that the second component is a random copolymer of propylene and one or more comonomers different from propylene that is produced in presence of a Ziegler-Natta catalyst.

A Ziegler-Natta catalyst comprises a titanium compound, which has at least one titanium-halogen bond, and an internal donor, both supported on magnesium halide in active form. The internal donor is a compound selected from the group consisting of phthalates, diethers, succinates, di-ketones, enamino-imines and any blend of these. The preferred internal donor is a compound selected from the group consisting of phthalates, diethers, succinates and any blend of these. The most preferred internal donor is a compound selected from the group consisting of phthalates, diethers or blends of these.

Suitable phthalates are selected from the alkyl, cycloalkyl and aryl phthalates, such as for example diethyl phthalate, diisobutyl phthalate, di-n-butyl phthalate, dioctyl phthalate, diphenyl phthalate and benzylbutyl phthalate. Such catalysts are for example commercially available from Basell under the Avant trade name.

Suitable diethers are 1,3-diethers of formula

$$R^1R^2C(CH_2OR^3)(CH_2OR^4)$$

wherein $R^1$ and $R^2$ are the same or different and are $C_1$-$C_{18}$ alkyl, $C_3$-$C_{18}$ cycloalkyl or $C_7$-$C_{18}$ aryl radicals; $R^3$ and $R^4$ are the same or different and are $C_1$-$C_4$ alkyl radicals; or are the 1,3-diethers in which the carbon atom in position 2 belongs to a cyclic or polycyclic structure made up of 5, 6 or 7 carbon atoms and containing two or three unsaturations. Ethers of this type are disclosed in published European patent applications EP-A-0 361 493 and EP-A-0 728 769. Representative examples of said diethers are 2-methyl-2-isopropyl-1,3-dimethoxypropane; 2,2-diisobutyl-1,3-dimethoxypropane; 2-isopropyl-2-cyclopentyl-1,3-dimethoxypropane; 2-isopropyl-2-isoamyl-1,3-dimethoxypropane; 9,9-bis (methoxymethyl)fluorene.

Suitable succinate compounds have the formula

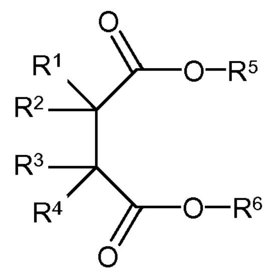

wherein $R^1$ to $R^4$ are equal to or different from one another and are hydrogen, or a $C_1$-$C_{20}$ linear or branched alkyl, alkenyl, cycloalkyl, aryl, arylalkyl or alkylaryl group, optionally containing heteroatoms, and $R^1$ to $R^4$, being joined to the same carbon atom, can be linked together to form a cycle; and $R^5$ and $R^6$ are equal to or different from one another and are a linear or branched alkyl, alkenyl, cycloalkyl, aryl, arylalkyl or alkylaryl group, optionally containing heteroatoms.

The organoaluminium compound is advantageously an Al-alkyl compound of the Al-trialkyls family, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups. Al-triethyl is preferred. Advantageously, the Al-trialkyl has a hydride content, expressed as $AlH_3$, of less than 1.0 wt% with respect to the Al-trialkyl. More preferably, the hydride content is less than 0.5 wt%, and most preferably the hydride content is less than 0.1 wt%.

The organoaluminium compound is used in such an amount as to have a molar ratio Al/Ti in the range from 1 to 1000. Preferably, the upper limit is 200.

Suitable external electron donors (ED) include certain silanes, ethers, esters, amines, ketones, heterocyclic compounds and blends of these. It is preferred to use a 1,3-diether or a silane. It is most preferred to use a silane of the

general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl) Si(OCH$_3$)$_2$ (referred to as "C donor"), (phenyl)$_2$Si(OCH$_3$)$_2$ and (cyclopentyl)$_2$ Si(OCH$_3$)$_2$ (referred to as "D donor").

If the external donor (ED) is present the molar ratio of organo-aluminium compound to external donor ("Al/ED") ranges advantageously between 1 and 1000. The upper limit of the Al/ED ratio preferably is at most 800, more preferably at most 600 and most preferably at most 400. The lower limit of the Al/ED molar ratio preferably is at least 5, more preferably at least 10.

Hydrogen is used to control the chain lengths of the propylene polymers. For the production of propylene polymers with higher MFI, i.e. with lower average molecular weight and shorter polymer chains, the concentration of hydrogen in the polymerization medium needs to be increased. Inversely, the hydrogen concentration in the polymerization medium has to be reduced in order to produce propylene polymers with lower MFI, i.e. with higher average molecular weight and longer polymer chains.

The polymerization of propylene is carried out according to known techniques. The polymerization can for example be carried out in liquid propylene as reaction medium. It can also be carried out in a diluent, such as an inert hydrocarbon (slurry polymerization) or in the gas phase.

In a first specific embodiment the second component is a random copolymer of propylene and from 4.0 wt% to 4.5 wt%, relative to the total weight of said random copolymer, of ethylene. The random copolymer has a melt flow index in the range from 1.5 dg/min to 1.9 dg/min, measured according to ISO 1133, condition L, at 230°C and 2.16 kg. The random copolymer comprises from 1200 ppm to 1600 ppm, relative to the total weight of the random copolymer, of a phosphate ester nucleating agent.

In a second specific embodiment the second component is a random copolymer of propylene and from 2.5 wt% to 3.0 wt%, relative to the total weight of said random copolymer, of ethylene. The random copolymer has a melt flow index in the range from 1.5 dg/min to 2.0 dg/min, measured according to ISO 1133, condition L, at 230°C and 2.16 kg.

BLOWN FILM

It is essential that the blown film of the present invention comprises a polypropylene layer, said polypropylene layer comprising the polypropylene composition of the present application in at least 50 wt%, relative to the total weight of said polypropylene layer. Preferably, the polypropylene composition is comprised in said polypropylene layer in at least 70 wt%, more preferably in at least 90 wt%, even more preferably in at least 95 wt%, still even more preferably in at least 97 wt%, and most preferably in at least 99 wt%.

The blown film of the present invention as described above may also be part of a multilayer structure, i.e. one having at least two layers, such as for example a multilayer film or a laminate. Thus, the present invention also provides a multilayer film or a laminate comprising a polypropylene layer as defined above and one or more further polymer layers comprising at least 50 % by weight, relative to the total weight of said further polymer layer, of one or more further polymers. Preferably, said further polymer is comprised in said further polymer layer in at least 70 % by weight, more preferably in at least 90 % b weight, even more preferably in at least 95 % by weight, still even more preferably in at least 97 % by weight and most preferably in at least 99 % by weight.

The choice of said further polymer is not particularly limited. Preferably, it is selected from the group consisting of polyethylenes (PE), ethylene vinyl acetate (EVA), ethylene vinyl alcohol (EVOH), polycarbonates (PC), polyesters, fluoropolymers (for example polymers of vinylidene fluoride ($H_2C=CF_2$) and/or copolymers of vinylidene fluoride and hexafluoropropylene ($F_2C=CF-CF_3$)), polyamides, polyvinyl chloride, poly(lactic acid), and polystyrene.

Alternatively, the present invention also provides a multilayer film of a laminate comprising a polypropylene layer as defined above and a metallic layer. Said metallic layer may for example be an aluminium layer.

Optionally, the multilayer films and laminates of the present invention may comprise tie layers to provide adhesion between layers.

The blown films, multilayer films and laminates of the present invention are used in food packaging, barrier packaging and packaging of medical devices. In food packaging particularly preferred are retort packaging and re-heat packaging, e.g. for re-heating in a microwave oven.

The blown film of the present invention is produced by providing the polypropylene composition of the present invention to a first extruder. Said polypropylene composition is melt-extruded through an annular die to form a first extrudate, which is in form of a bubble. Preferably, the melt temperature in the melt-extrusion step is in the range from

180°C to 300°C, more preferably in the range from 190°C to 290°C, and most preferably in the range from 200°C to 280°C. Subsequently, said first extrudate passes through an air ring, which expands the bubble and aids in cooling the molten polypropylene. Said first extrudate is then cooled by means of air and/or water on the outer and/or inner surfaces of said first extrudate. Preferably, said first extrudate is cooled by means of air on the outer and/or inner surfaces of said first extrudate. Processes for blown film production are for example described in Polypropylene Handbook, ed. Nello Pasquini, 2nd edition, Carl Hanser Verlag, Munich 2005, pages 412-414.

In addition to the steps for the production of the blown film of the present invention as described above the process for the production of the multilayer films of the present invention further comprises the steps of providing at least one further polymer composition to a corresponding number of further extruders. Said at least one further polymer composition is melt-extruded through an annular die to form at least one further extrudate. Then, this at least one further extrudate and the first extrudate, i.e. that of the polypropylene composition, are combined to form a combined extrudate, which is in form of a bubble; and which is then cooled as described above.

Surprisingly, it has been found that the use of a polypropylene composition according to the present invention offers advantages in blown film production. In particular, it has been found to allow the production of blown films with very good optical properties. Thus, the present invention shows advantages in the production of thick blown films, the production of which has hereto suffered from lack of optical properties and/or commercially viable production speeds. Alternatively, in the production of blown films of standard thicknesses, the present invention is believed to allow an increase in production speed while keeping the good optical properties of lower production speeds. The present invention also helps in running blown film if the blown film production line is limited in cooling capacity, i.e. not equipped to provide cooling air having a low temperature, such as for example cooling air of 5°C.

The present invention also provides a process for the production of laminates comprising the blown film of the present invention. Accordingly the blown film of the present invention, either as a monolayer or as a multilayer film, is combined with at least one further film by means of pressure, heat, adhesives or any combination of these. It is preferred that said at least one further film comprises at least one layer of a further polymer as defined above.

TEST METHODS

The melt flow index (MFI) is measured according to ISO 1133, condition L, at 230°C and 2.16 kg.

Molecular weights are determined by Size Exclusion Chromatography (SEC) at high temperature (145°C). A 10 mg PP sample is dissolved at 160°C in 10 ml of trichlorobenzene (technical grade) for 1 hour. The analytical conditions for the Alliance GPCV 2000 from WATERS are :

- Volume : +/- 400µl
- Injector temperature : 140°C
- Column and detector: 145°C
- Column set: 2 Shodex AT-806MS and 1 Styragel HT6E
- Flow rate 1ml/min
- Detector: Refractive index
- Calibration : Narrow standards of polystyrene
- Calculation : Based on Mark-Houwink relation ($\log(M_{PP}) = \log(M_{PS}) - 0.25323$)

Xylene solubles (XS), i.e. the xylene soluble fraction, are determined as follows: Between 4.5 and 5.5 g of propylene polymer are weighed into a flask and 300 ml xylene are added. The xylene is heated under stirring to reflux for 45 minutes. Stirring is continued for 15 minutes exactly without heating. The flask is then placed in a thermostat bath set to 25°C +/- 1°C for 1 hour. The solution is filtered through Whatman n° 4 filter paper and exactly 100 ml of solvent are collected. The solvent is then evaporated and the residue dried and weighed. The percentage of xylene solubles ("XS"), i.e. the amount of the xylene soluble fraction, is then calculated according to

$$\text{XS (in wt\%)} = (\text{Weight of the residue / Initial total weight of PP}) * 300$$

with all weights being in the same unit, such as for example in grams.

The $^{13}$C-NMR analysis is performed using a 400 MHz Bruker NMR spectrometer under conditions such that the signal intensity in the spectrum is directly proportional to the total number of contributing carbon atoms in the sample. Such conditions are well known to the skilled person and include for example sufficient relaxation time etc. In practice the intensity of a signal is obtained from its integral, i.e. the corresponding area. The data is acquired using proton decoupling, 4000 scans per spectrum, a pulse repetition delay of 20 seconds and a spectral width of 26000 Hz. The

sample is prepared by dissolving a sufficient amount of polymer in 1,2,4-trichlorobenzene (TCB, 99%, spectroscopic grade) at 130°C and occasional agitation to homogenize the sample, followed by the addition of hexadeuterobenzene ($C_6D_6$, spectroscopic grade) and a minor amount of hexamethyldisiloxane (HMDS, 99.5+ %), with HMDS serving as internal standard. To give an example, about 200 mg of polymer are dissolved in 2.0 ml of TCB, followed by addition of 0.5 ml of $C_6D_6$ and 2 to 3 drops of HMDS.

Following data acquisition the chemical shifts are referenced to the signal of the internal standard HMDS, which is assigned a value of 2.03 ppm.

The isotacticity is determined by $^{13}$C-NMR analysis on the total polymer. In the spectral region of the methyl groups the signals corresponding to the pentads mmmm, mmmr, mmrr and mrrm are assigned using published data, for example A. Razavi, Macromol. Symp., vol. 89, pages 345-367. Only the pentads mmmm, mmmr, mmrr and mrrm are taken into consideration due to the weak intensity of the signals corresponding to the remaining pentads. For the signal relating to the mmrr pentad a correction is performed for its overlap with a methyl signal related to 2,1-insertions. The percentage of mmmm pentads is then calculated according to

$$\%\ mmmm = AREA_{mmmm} / (AREA_{mmmm} + AREA_{mmmr} + AREA_{mmrr} + AREA_{mrrm}) \cdot 100$$

Determination of the percentage of 2,1-insertions for a metallocene propylene homopolymer: The signals corresponding to the 2,1-insertions are identified with the aid of published data, for example H.N. Cheng, J. Ewen, Makromol. Chem., vol. 190 (1989), pages 1931-1940. A first area, AREA1, is defined as the average area of the signals corresponding to 2,1-insertions. A second area, AREA2, is defined as the average area of the signals corresponding to 1,2-insertions. The assignment of the signals relating to the 1,2-insertions is well known to the skilled person and need not be explained further. The percentage of 2,1-insertions is calculated according to

$$2,1\text{-insertions (in \%)} = AREA1 / (AREA\ 1 + AREA\ 2) \cdot 100$$

with the percentage in 2,1-insertions being given as the molar percentage of 2,1-inserted propylene with respect to total propylene.

The determination of the percentage of 2,1-insertions for a metallocene random copolymer of propylene and ethylene is determined by two contributions:

(i) the percentage of 2,1-insertions as defined above for the propylene homopolymer, and
(ii) the percentage of 2,1-insertions, wherein the 2,1-inserted propylene neighbors an ethylene,

thus the total percentage of 2,1-insertions corresponds to the sum of these two contributions. The assignments of the signal for case (ii) can be done either by using reference spectra or by referring to the published literature.

The ethylene content of a metallocene random copolymer can be determined by $^{13}$C-NMR as the sum of

(i) the percentage of ethylene as determined following the procedure described by G.J. Ray et al. in Macromolecules, vol. 10, n° 4, 1977, p. 773-778, and
(ii) the percentage of ethylene wherein the ethylene neighbors a 2,1-inserted propylene (see above).

Melting temperatures were measured on a DSC 2690 instrument by TA Instruments. To erase the thermal history the samples were first heated to 200°C and kept at 200°C for a period of 3 minutes. The reported melting temperatures were then determined with heating and cooling rates of 20°C/min.

## Claims

**1.** Polypropylene composition having a melt flow index in the range from 0.1 dg/min to 15.0 dg/min, said polypropylene composition comprising

(a) from 5 wt% to 50 wt% relative to the polypropylene composition of a first component, said first component

being a propylene polymer produced in presence of a metallocene-based catalyst system, and
(b) from 95 wt% to 50 wt% relative to the polypropylene composition of a second component, said second component being a random copolymer of propylene one or more comonomers produced in presence of a Ziegler-Natta polymerization catalyst,

wherein the first component has a melt flow index in the range from 5.0 dg/min to 100 dg/min,
wherein the second component comprises from 0.5 wt% to 6.0 wt%, relative to the total weight of the random copolymer, of one or more comonomers different from propylene, and wherein the second component has a melt flow index in the range from 0.5 dg/min to 5.0 dg/min, with all melt flow indices measured according to ISO 1133, condition L, at 230°C and 2.16 kg.

**2.** Polypropylene composition according to claim 1, further comprising an alpha-nucleating agent.

**3.** Polypropylene composition according to claim 1 or claim 2, further comprising from 10 ppm to 5000 ppm, relative to the total weight of the polypropylene composition, of an alpha-nucleating agent.

**4.** Polypropylene composition according to any of the preceding claims, wherein the nucleating agent is a phosphate ester salt.

**5.** Polypropylene composition according to any of the preceding claims, wherein the polypropylene composition has a melt flow index in the range from 0.25 dg/min to 8.0 dg/min, measured according to ISO 1133, condition L, at 230°C and 2.16 kg.

**6.** Blown film comprising the a polypropylene layer, which in turn comprises at least 50 wt%, relative to the total weight of said polypropylene layer, of the polypropylene composition of claims 1 to 5.

**7.** Process for the production of the inventive blown film, the process comprising the steps of

(a) providing the polypropylene polymer composition of claims 1 to 5 to a first extruder,
(b) melt-extruding the propylene polymer composition of step (a) through an annular die to form a first extrudate, and
(c) cooling the extrudate obtained in the preceding step by means of air and/or water on the outer and/or inner surfaces of the extrudate to form a blown film.

Europäisches Patentamt
European Patent Office
Office européen des brevets

# EUROPEAN SEARCH REPORT

Application Number
EP 09 15 4640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/11077 A1 (MONTELL TECHNOLOGY COMPANY BV [NL]) 2 March 2000 (2000-03-02)<br>* the whole document *<br>----- | 1-7 | INV.<br>C08L23/10 |
| A | WO 2007/024721 A2 (FINA TECHNOLOGY [US]; ASHBAUGH JOHN [US]; MUSGRAVE MIKE [US]) 1 March 2007 (2007-03-01)<br>* claims 1-21 *<br>----- | 2-4 | |
| A | WO 2008/015161 A2 (TOTAL PETROCHEMICALS RES FELUY [BE]; RADERMACHER FABIENNE [BE]) 7 February 2008 (2008-02-07)<br>* the whole document *<br>----- | 1-7 | |

TECHNICAL FIELDS SEARCHED (IPC)

C08L

The present search report has been drawn up for all claims

| Place of search | Date of completion of the search | Examiner |
|---|---|---|
| Munich | 20 July 2009 | Van Golde, Lambertus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 09 15 4640

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2009

| Patent document cited in search report | Publication date | Patent family member(s) | Publication date |
|---|---|---|---|
| WO 0011077 A1 | 02-03-2000 | AT 275169 T | 15-09-2004 |
| | | AU 5188699 A | 14-03-2000 |
| | | BR 9906734 A | 15-08-2000 |
| | | CA 2305336 A1 | 02-03-2000 |
| | | CN 1275145 A | 29-11-2000 |
| | | DE 69919834 D1 | 07-10-2004 |
| | | DE 69919834 T2 | 29-09-2005 |
| | | EP 1023388 A1 | 02-08-2000 |
| | | HU 0004615 A2 | 28-06-2001 |
| | | JP 2002523544 T | 30-07-2002 |
| | | NO 20002007 A | 06-06-2000 |
| | | PL 339633 A1 | 02-01-2001 |
| | | TR 200001039 T1 | 21-11-2000 |
| | | US 6037417 A | 14-03-2000 |
| WO 2007024721 A2 | 01-03-2007 | US 2007040292 A1 | 22-02-2007 |
| WO 2008015161 A2 | 07-02-2008 | EP 1884539 A1 | 06-02-2008 |
| | | EP 2046886 A2 | 15-04-2009 |
| | | KR 20090033439 A | 03-04-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03102069 A
- EP 0152701 A1
- EP 0368577 A2
- EP 0361493 A
- EP 0728769 A


### Non-patent literature cited in the description


- **Blomenhofer et al.** *Macromolecules,* 2005, vol. 38, 3688-3695
- Plastics Additives Handbook. Hanser Publishers
- Polypropylene Handbook. Carl Hanser Verlag, 2005, 412-414
- **A. Razavi.** *Macromol. Symp.,* vol. 89, 345-367
- **H.N. Cheng ; J. Ewen.** *Makromol. Chem.,* 1989, vol. 190, 1931-1940
- **G.J. Ray et al.** *Macromolecules,* 1977, vol. 10 (4), 773-778